# EUROPÄISCHE PATENTSCHRIFT

(11) **EP 3 399 609 B1**
(45) Veröffentlichungstag und Bekanntmachung des Hinweises auf die Patenterteilung: **26.05.2021**
(21) Anmeldenummer: 18167141.3
(22) Anmeldetag: 13.04.2018
(51) Int. Cl.: H02B 1/21, H02B 1/18

(54) **SICHERUNGSLASTTRENNERSYSTEM**
FUSE LOAD DISCONNECTOR SYSTEM
SYSTÈME DE SECTIONNEUR FUSIBLE À COUPURE EN CHARGE

(30) Priorität: 05.05.2017 DE 102017207576
(43) Veröffentlichungstag der Anmeldung: 07.11.2018
(73) Patentinhaber: Siemens Aktiengesellschaft, 80333 München (DE)
(72) Erfinder: Bohac, Jaroslav, 561 02 Dolni Dobrouc (CZ); Cizinsky, Radovan, 517 11 Javornice (CZ)

(56) Entgegenhaltungen:
- EP-A1- 0 440 933
- EP-A1- 2 874 251
- DE-C1- 3 642 517

## Beschreibung

Die vorliegende Erfindung betrifft ein Sicherungslasttrennersystem zur Montage an eine Sammelschiene eines Schaltschranks.

Trenner bzw. Trennschalter sind elektrische Hochspannungsschalter, welche zum lastfreien elektrischen Trennen von elektrischen Anlagenteilen ausgebildet sind. Ein elektrisches Trennen unter Last ist mittels herkömmlicher Trenner nicht bzw. nur eingeschränkt möglich und kann aufgrund eines beim Trennen entstehenden Lichtbogens zur Zerstörung des Trenners führen. Lasttrenner bzw. Lasttrennschalter sind elektrische Hochspannungsschalter, welche zum elektrischen Trennen von elektrischen Anlagen unter Last ausgebildet sind. Hierfür weisen Lasttrenner beispielsweise eine Lichtbogenlöschvorrichtung auf, mittels welcher ein beim elektrischen Trennen unter Last entstehender Lichtbogen von Schaltelementen des Lasttrenners wegführbar und in einem hitzebeständigen Abschnitt der Lichtbogenlöschvorrichtung, wie z.B. einer Lichtbogenlöschkammer, löschbar ist. Auf diese Weise wird eine durch den Lichtbogen verursachte thermische Überbelastung sensibler Komponenten des Lasttrenners vermieden.

Eine besondere Ausführungsform von Lasttrennern sind Sicherungslasttrenner bzw. Sicherungslasttrennschalter. Sicherungslasttrenner sind Lasttrenner, welche zum automatischen Trennen von elektrischen Anlagenteilen ausgebildet sind. Hierfür weisen Sicherungslasttrenner beispielsweise einen Schlagbolzen mit einer Treibladung auf, welche im Falle einer Auslösung des Sicherungslasttrenners, beispielsweise bei Überschreiten einer maximal zulässigen Stromstärke, den Schlagbolzen vorantreibt und somit die elektrische Trennung bewirkt.

Sicherungslasttrenner können insbesondere auf zwei Arten in einem Schaltschrank montiert werden. Bei der Bodenmontage werden die Sicherungslasttrenner direkt am Boden bzw. einer Rückwand des Schaltschranks montiert. Bei der Sammelschienenmontage werden die Sicherungslasttrenner an mindestens einer Sammelschiene des Schaltschranks montiert. Hierfür weisen 3-polige Sicherungslasttrenner oftmals Befestigungshaken auf, mittels welcher die Sicherungslasttrenner in die Sammelschiene einhängbar sind. Für die Sammelschienenmontage von 1-poligen Sicherungslasttrennern, welche auch als Sicherungslasttrenner in 1-Pol-Version bezeichnet werden, und 4-poligen Sicherungslasttrennern, welche auch als Sicherungslasttrenner in 4-Pol-Version bezeichnet werden, werden derzeit unterschiedlich ausgebildete Adapter verwendet, welche eine elektrische Kopplung mit den jeweils vorgesehenen, unterschiedlichen Sammelschienen ermöglichen. Ein System aus mindestens einem Sicherungslasttrenner und mindestens einem Adapter zur Sammelschienenmontage wird auch als Sicherungslasttrennersystem bezeichnet.

Die EP 0440933 A1 offenbart einen Adapter zum Aufsetzen auf Stromsammelschienen und für den unmittelbaren Anschluss eines elektrischen Gerätes, wie z.B. eines Trenners.

In der DE 3642517 C1 ist ein Geräteadapter zum mechanischen und elektrischen Verbinden von Installationsgeräten mit Stromsammelschienen eines Sammelschienensystems beschrieben.

Die EP 2874251 A1 offenbart ein elektrisches Installationsgerät mit einem Gehäuse und mindestens einem Haken (9) auf einer Rückseite des Installationsgeräts, wobei das Installationsgerät mittels des Hakens im Bereich eines Schenkels des Hakens an einer Sammelschiene befestigbar ist.

Bekannte Adapterlösungen haben den Nachteil, dass zur Montage von 1-poligen und 4-poligen Sicherungslasttrennern eine Vielzahl unterschiedlicher Adapter erforderlich ist.

Es ist daher die Aufgabe der vorliegenden Erfindung, ein Sicherungslasttrennersystem zu schaffen, welches die Nachteile des Stands der Technik behebt oder zumindest teilweise behebt. Es ist insbesondere die Aufgabe der vorliegenden Erfindung, ein Sicherungslasttrennersystem bereitzustellen, das mit einfachen Mitteln sowie kostengünstig herstellbar ist und Kosten, insbesondere Bereitstellungs-, Lager- sowie Montagekosten, für eine Sammelschienenmontage unterschiedlicher Sicherungslasttrenner reduziert.

Voranstehende Aufgabe wird durch die Patentansprüche gelöst. Demnach wird die Aufgabe durch ein Sicherungslasttrennersystem gemäß Anspruch 1 gelöst. Das erfindungsgemäße Sicherungslasttrennersystem weist einen Sicherungslasttrenner mit einem Kontaktträger zur elektrischen Kopplung des Sicherungslasttrenners und einen Montageadapter zum Aufnehmen des Kontaktträgers sowie zur Montage an Sammelschienen eines Schaltschranks auf. Der Montageadapter weist einen ersten Leiterabschnitt zum elektrischen Koppeln des Sicherungslasttrenners mit einer ersten Sammelschiene des Schaltschranks auf. Ferner weist das Sicherungslasttrennersystem mindestens einen ersten Adapterhaken zum elektrischen Koppeln des ersten Leiterabschnitts mit der ersten Sammelschiene auf, wobei der erste Adapterhaken mit dem ersten Leiterabschnitt elektrisch und mechanisch koppelbar ist. Erfindungsgemäß weist der Montageadapter einen zweiten Leiterabschnitt zum elektrischen Koppeln des Sicherungslasttrenners mit einer zweiten Sammelschiene des Schaltschranks auf. Das Sicherungslasttrennersystem weist mindestens einen zweiten Adapterhaken zum elektrischen Koppeln des zweiten Leiterabschnitts mit der zweiten Sammelschiene auf, wobei der zweite Adapterhaken mit dem zweiten Leiterabschnitt elektrisch und mechanisch koppelbar ist. Der Montageadapter weist mindestens einen ersten Anschlussabschnitt auf. Dabei weist das Sicherungslasttrennersystem mindestens einen dritten Adapterhaken zum mechanischen Fixieren an dem ersten Anschlussabschnitt sowie zum mechanischen Koppeln mit einer dritten Sammelschiene des Schaltschranks auf. Der dritte Adapterhaken ist dabei als elektrischer Isolator ausgebildet, so dass der Montageadapter gegenüber der dritten Sammelschiene elektrisch isolierbar ist. Zudem weist der Montageadapter und/oder der erste Adapterhaken eine erste Fixiervorrichtung zum lösbaren Fixieren des ersten Adapterhakens am Montageadapter und der Montageadapter und/oder der zweite Adapterhaken eine zweite Fixiervorrichtung zum lösbaren Fixieren des zweiten Adapterhakens am Montageadapter auf.

Der Sicherungslasttrenner ist ausgebildet, unter bestimmten Voraussetzungen eine unter Last stehende elektrische Verbindung zu trennen. Eine solche Voraussetzung kann beispielsweise eine Stromstärke, welche einen Stromstärkenschwellwert übersteigt, und/oder eine hoher Temperatur, welche einen Temperaturschwellwert übersteigt, oder dergleichen sein. Ferner kann als Voraussetzung auch eine Dauer des jeweiligen Überschreitens berücksichtigt sein, so dass beispielsweise ein kurzzeitiges Überschreiten eines ersten Stromstärkenschwellwerts bzw. Temperaturschwellwerts als Voraussetzung zum Trennen nicht ausreicht. Zusätzlich kann vorgesehen sein, dass ein absoluter Stromstärkenschwellwert bzw. Temperaturschwellwert bestimmt ist, bei welchem ein Trennen stets erfolgt, unabhängig von einer Dauer des Überschreitens des Schwellwerts. Vorzugsweise weist der Sicherungslasttrenner eine Lichtbogenlöschvorrichtung, insbesondere mit einer Lichtbogenlöschkammer, zum Löschen eines beim Trennen der elektrischen Verbindung innerhalb des Sicherungslasttrenners entstehenden Lichtbogens auf, um eine Beschädigung bzw. Zerstörung des Sicherungslasttrenner zu vermeiden.

Der Kontaktträger kann beispielsweise einteilig bzw. integral mit dem Sicherungslasttrenner ausgebildet sein. Alternativ kann der Kontaktträger lösbar, z.B. mittels einer Clip-, Steck-, Schraubverbindung oder dergleichen, oder unlösbar, z.B. über eine Kleb-, Schweißverbindung oder dergleichen, mit dem Sicherungslasttrenner verbunden sein. Über den Kontaktträger ist der Sicherungslasttrenner mit einer elektrischen Komponente, insbesondere dem Montageadapter, elektrisch koppelbar.

Der Montageadapter ist zum Aufnehmen des Kontaktträgers und somit zum Aufnehmen des Sicherungslasttrenners ausgebildet. Hierfür weist der Montageadapter vorzugsweise eine Kontaktträgeraufnahme auf, welche vorzugsweise einer Außenkontur eines Bereichs des Kontaktträgers entspricht, so dass der Kontaktträger zumindest abschnittsweise formschlüssig am Montageadapter anordenbar ist. Vorzugsweise weist der Montageadapter mindestens ein Haltemittel zum lösbaren Halten des am Montageadapter angeordneten Kontaktträgers auf. Somit ist der Kontaktträger mit dem Montageadapter mechanisch koppelbar. Überdies ist der Montageadapter zur elektrischen Kopplung mit dem Kontaktträger ausgebildet. Vom Kontaktträger bereitgestellte elektrische Kontakte sind hierfür mit entsprechenden elektrischen Kontakten des Montageadapters in Kontakt bringbar.

Erfindungsgemäß ist der Montageadapter zur elektrischen sowie mechanischen Kopplung mit Sammelschienen eines Schaltschranks konfigurierbar. Zur elektrischen Kopplung mit einer ersten Sammelschiene weist der Montageadapter einen ersten Leiterabschnitt und zur elektrischen Kopplung mit einer zweiten Sammelschiene weist der Montageadapter einen zweiten Leiterabschnitt auf. Um eine solche elektrische Kopplung herzustellen, weist das Sicherungslasttrennersystem einen ersten Adapterhaken und einen zweiten Adapterhaken auf. Der erste Adapterhaken ist mit dem ersten Leiterabschnitt mechanisch und elektrisch koppelbar. Ferner ist der erste Adapterhaken mit der ersten Sammelschiene elektrisch koppelbar. Vorzugsweise ist der erste Adapterhaken mit der ersten Sammelschiene auch mechanisch koppelbar, insbesondere durch Einhängen in die erste Sammelschiene. Der zweite Adapterhaken ist mit dem zweiten Leiterabschnitt mechanisch und elektrisch koppelbar. Überdies ist der zweite Adapterhaken mit der zweiten Sammelschiene elektrisch koppelbar. Vorzugsweise ist der zweite Adapterhaken mit der zweiten Sammelschiene auch mechanisch koppelbar, insbesondere durch Einhängen in die zweite Sammelschiene.

Unter einer mechanischen Kopplung wird im Rahmen der Erfindung eine Kopplung von Komponenten verstanden, welche ein Halten oder Fixieren der Komponenten bewirkt. Unter Halten kann erfindungsgemäß beispielsweise ein Einhängen, Einstecken oder dergleichen verstanden werden. Unter Fixieren kann erfindungsgemäß beispielsweise ein Klemmen, Clipsen, Schrauben bzw. Verschrauben oder dergleichen verstanden werden. Unter einer elektrischen Kopplung wird im Rahmen der Erfindung eine Kopplung von Komponenten verstanden, welche einen Austausch von Elektronen zwischen den Komponenten ermöglicht. Erfindungsgemäß ist der Sicherungslasttrenner in Abhängigkeit der Ausführungsform des Sicherungslasttrenners, nämlich als 1-Pol-Version oder 4-Pol-Version, über den Kontaktträger, den Montageadapter, den ersten Leiterabschnitt und den ersten Adapterhaken oder alternativ über den Kontaktträger, den Montageadapter, den zweiten Leiterabschnitt und den zweiten Adapterhaken mit der Sammelschiene elektrisch koppelbar.

Ein erfindungsgemäßes Sicherungslasttrennersystem hat den Vorteil, dass zur elektrischen und mechanischen Kopplung unterschiedlicher Sicherungslasttrenner, insbesondere Sicherungslasttrenner der 1-Pol-Version und der 4-Pol-Version, lediglich ein Montageadapter verwendet wird, welcher mittels des ersten Adapterhaken bzw. zweiten Adapterhaken an den jeweiligen Sicherungslasttrenner anpassbar ist. Somit ist mit einfachen Mitteln eine Teilevielfalt des Sicherungslasttrennersystems reduziert. Hierdurch können Herstellungs- sowie Montagekosten von Sicherungslasttrennern reduziert werden.

Gemäß einer bevorzugten Weiterbildung der Erfindung kann bei einem Sicherungslasttrennersystem vorgesehen sein, dass der erste Adapterhaken eine erste Klemmvorrichtung zum Klemmen des ersten Adapterhakens an die erste Sammelschiene und/oder der zweite Adapterhaken eine zweite Klemmvorrichtung zum Klemmen des zweiten Adapterhakens an die zweite Sammelschiene aufweist. Eine Klemmvorrichtung kann beispielsweise eine Federvorrichtung aufweisen, welche ein Klemmelement gegen die Sammelschiene drückt. Alternativ oder zusätzlich kann die Klemmvorrichtung eine Klemmschraube aufweisen, welche gegen die Sammelschiene oder einen gegen die Sammelschiene drückbaren Klemmschuh schraubbar ist. Eine erste Klemmvorrichtung bzw. zweite Klemmvorrichtung hat den Vorteil, dass der Montageadapter somit besser an der Sammelschiene befestigbar ist. Die elektrische Kopplung kann somit auch bei starken Erschütterungen gewährleistet werden.

Der Montageadapter und/oder der erste Adapterhaken weist eine erste Fixiervorrichtung zum lösbaren Fixieren des ersten Adapterhakens am Montageadapter auf. Zudem weist der Montageadapter und/oder der zweite Adapterhaken eine zweite Fixiervorrichtung zum lösbaren Fixieren des zweiten Adapterhakens am Montageadapter aufweist. Wenn ein Adapterhaken die Fixiervorrichtung aufweist, kann das Fixieren beispielsweise gegen den jeweiligen Leiterabschnitt oder gegen ein Gehäuse des Montageadapters erfolgen. Die Fixiervorrichtung weist vorzugsweise einen Clip und/oder eine Schraube auf. Eine erste Fixiervorrichtung und eine zweite Fixiervorrichtung haben den Vorteil, dass der erste Adapterhaken und/oder der zweite Adapterhaken besser am Montageadapter befestigbar sind. Somit kann der Montageadapter bereits mit dem entsprechenden Adapterhaken vormontiert bereitgestellt werden. Auf diese Weise ist eine Montage des Sicherungslasttrenners am Schaltschrank verbessert. Hierdurch können beispielsweise Montagekosten sowie -zeit reduziert werden. Ferner hat eine Fixiervorrichtung den Vorteil, dass der Montageadapter somit besser an der Sammelschiene befestigbar ist. Die elektrische Kopplung kann somit auch bei starken Erschütterungen gewährleistet werden.

Der Montageadapter weist mindestens einen ersten Anschlussabschnitt auf, wobei das Sicherungslasttrennersystem mindestens einen dritten Adapterhaken zum mechanischen Fixieren an dem ersten Anschlussabschnitt sowie zum mechanischen Koppeln mit einer dritten Sammelschiene des Schaltschranks aufweist. Mittels des ersten Anschlussabschnitts und des dritten Adapterhakens ist der Montageadapter mit der Sammelschiene mechanisch koppelbar. Vorzugsweise weist der Montageadapter einen zweiten Anschlussabschnitt auf, so dass der Montageadapter über den zweiten Anschlussabschnitt und vorzugsweise den dritten Adapterhaken mit einer vierten Sammelschiene des Schaltschranks mechanisch koppelbar ist. Ein Anschlussabschnitt hat den Vorteil, dass eine Befestigung des Montageadapters am Schaltschrank mit einfachen Mitteln sowie kostengünstig verbessert ist.

Ferner ist bevorzugt, dass der dritte Adapterhaken eine dritte Klemmvorrichtung zum Klemmen des dritten Adapterhakens an die dritte Sammelschiene aufweist. Eine Klemmvorrichtung kann beispielsweise eine Federvorrichtung aufweisen, welche ein Klemmelement gegen die Sammelschiene drückt. Alternativ oder zusätzlich kann die Klemmvorrichtung eine Klemmschraube aufweisen, welche gegen die Sammelschiene oder einen gegen die Sammelschiene drückbaren Klemmschuh schraubbar ist. Eine dritte Klemmvorrichtung hat den Vorteil, dass der Montageadapter somit besser an der Sammelschiene befestigbar ist. Eine sichere mechanische Kopplung kann somit auch bei starken Erschütterungen gewährleistet werden.

Es kann erfindungsgemäß vorgesehen sein, dass der Montageadapter und/oder der dritte Adapterhaken eine dritte Fixiervorrichtung zum lösbaren Fixieren des dritten Adapterhakens am Montageadapter aufweist. Wenn der dritte Adapterhaken die dritte Fixiervorrichtung aufweist kann das Fixieren beispielsweise gegen den ersten Anschlussabschnitt oder gegen ein Gehäuse des Montageadapters erfolgen. Die dritte Fixiervorrichtung weist vorzugsweise einen Clip und/oder eine Schraube auf. Eine dritte Fixiervorrichtung hat den Vorteil, dass der dritte Adapterhaken besser am Montageadapter befestigbar ist. Somit kann der Montageadapter bereits mit dem dritten Adapterhaken vormontiert bereitgestellt werden. Auf diese Weise ist eine Montage des Sicherungslasttrenners am Schaltschrank verbessert. Hierdurch können beispielsweise Montagekosten sowie -zeit reduziert werden. Ferner hat die dritte Fixiervorrichtung den Vorteil, dass der Montageadapter somit besser an der dritten Sammelschiene befestigbar ist. Eine sichere mechanische Kopplung kann somit auch bei starken Erschütterungen gewährleistet werden.

Zudem ist der dritte Adapterhaken als elektrischer Isolator ausgebildet ist, so dass der Montageadapter gegenüber der dritten Sammelschiene elektrisch isolierbar ist. Zusätzlich oder alternativ ist es bevorzugt, dass ein etwaiger zweiter Anschlussabschnitt als elektrischer Isolator ausgebildet ist. Der elektrische Isolator kann beispielsweise ein Keramikelement oder dergleichen aufweisen. Ein elektrischer Isolator hat den Vorteil, dass ein unerwünschter Stromfluss von einer Sammelschiene zum Montageadapter auf diese Weise mit einfachen Mitteln sowie kostengünstig vermeidbar ist.

In einer vorteilhaften Ausgestaltung, nicht Teil der Erfindung, ist der Montageadapter zur Aufnahme unterschiedlich großer Kontaktträger von mindestens zwei unterschiedlich großen Sicherungslasttrennern ausgebildet. Der Montageadapter ist zur Aufnahme des Kontaktträgers derart ausgebildet, dass der Kontaktträger lagefixiert an dem Montageadapter anordenbar ist. Eine gegenseitige Ausrichtung kann beispielsweise mittels Formschlusselemente, welche insbesondere am Montageadapter ausgebildet sind, erfolgen. Derartige Formschlusselemente sind vorzugsweise derart ausgebildet, ein Einsetzen mehrerer unterschiedlicher Sicherungslasttrenner zu ermöglichen. Alternativ können solche Formschlusselemente abtrennbar ausgebildet sein, insbesondere mittels mindestens einer Sollbruchstelle. Vorzugsweise weist der Montageadapter eine Rastvorrichtung zum Halten des aufgenommenen Sicherungslasttrenners auf. Derartige Montageadapter haben den Vorteil, dass unterschiedliche Arten von Sicherungslasttrennern, wie z.B. 1-polige und 4-polige Sicherungslasttrenner, mit dem Montageadapter mechanisch sowie elektrisch koppelbar sind.

Es ist bevorzugt, dass das Sicherungslasttrennersystem mindestens zwei unterschiedlich große Sicherungslasttrenner mit unterschiedlich großen Kontaktträgern aufweist, wobei die Kontaktträger vom Montageadapter aufnehmbar sind. Die Sicherungslastträger weisen vorzugsweise einen 1-poligen Sicherungslastträger sowie einen 4-poligen Sicherungslastträger auf. Dies hat den Vorteil, dass das Sicherungslasttrennersystem flexibel für unterschiedliche Anwendungsfälle verwendbar ist, wobei Variantenvielfalt sowie Herstellungskosten der Komponenten aufgrund der Vielseitigkeit des Montageadapters reduziert sind.

Vorzugsweise entspricht der zweite Adapterhaken dem dritten Adapterhaken. Vorzugsweise sind der zweite Adapterhaken und der dritte Adapterhaken identisch ausgebildet. Auf diese Weise ist die Variantenvielfalt der Komponenten des Sicherungslasttrennersystems weiter reduziert. Hierdurch können Herstellungs-, Lager- sowie Montagekosten weiter reduziert werden.

Ein erfindungsgemäßes Sicherungslasttrennersystem wird nachfolgend anhand von Zeichnungen näher erläutert. Es zeigen jeweils schematisch:
- Figur 1: in einer perspektivischen Ansicht eine bevorzugte Ausführungsform eines erfindungsgemäßen Sicherungslasttrennersystems im montierten Zustand,
- Figur 2: in einer perspektivischen Ansicht eine bevorzugte Ausführungsform eines Montageadapters in einer ersten Konfiguration,
- Figur 3: in einer perspektivischen Ansicht den Montageadapter aus Figur 2 in einer zweiten Konfiguration,
- Figur 4: in einer perspektivischen Ansicht eine bevorzugte Ausführungsform eines zweiten Adapterhakens, und
- Figur 5: in einer perspektivischen Ansicht eine bevorzugte Ausführungsform eines dritten Adapterhakens.

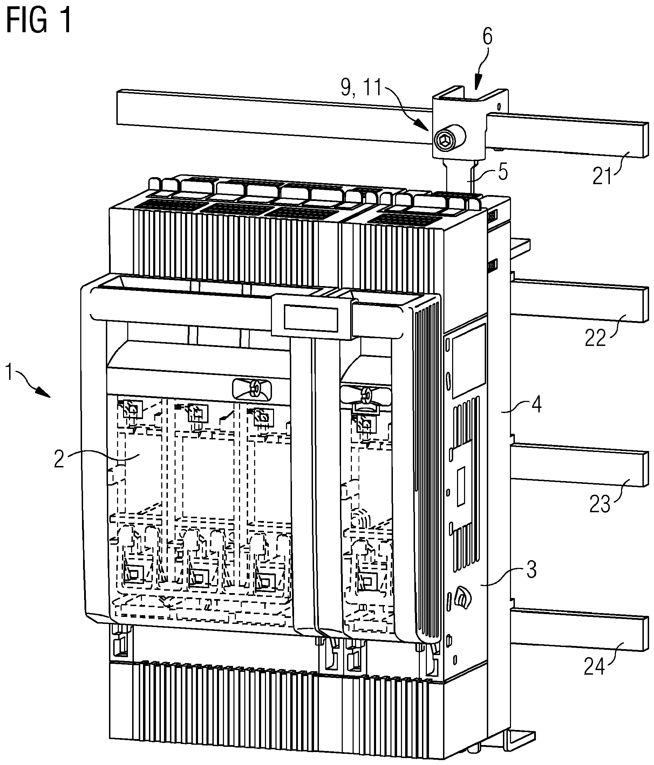

In Fig. 1 ist eine bevorzugte Ausführungsform eines erfindungsgemäßen Sicherungslasttrennersystems 1 im montierten Zustand in einer perspektivischen Ansicht schematisch dargestellt. Das Sicherungslasttrennersystem 1 weist vier Sicherungslasttrenner 2 mit jeweils einem Kontaktträger 3 auf, die nebeneinander auf Montageadaptern 4 angeordnet sind. Die in Fig. 1 gezeigten Sicherungslasttrenner 2 sind somit als 4-Pol-Version konfiguriert. Das Sicherungslasttrennersystem 1 ist an einer ersten Sammelschiene 21, einer zweiten Sammelschiene 22, einer dritten Sammelschiene 23 und einer vierten Sammelschiene 24 montiert. Ein Montageadapter 4 weist einen ersten Leiterabschnitt 5 auf, an dem ein erster Adapterhaken 6 mittels einer ersten Fixiervorrichtung 11 lösbar gehalten ist. Der erste Adapterhaken 6 ist in die erste Sammelschiene 21 eingehängt und mittels einer ersten Klemmvorrichtung 9 an dieser lösbar fixiert. In diesem Ausführungsbeispiel weisen die erste Klemmvorrichtung 9 und erste Fixiervorrichtung 11 eine gemeinsame Schraube auf. Über den ersten Adapterhaken sind die Sicherungslasttrenner 2 mit der ersten Sammelschiene 21 elektrisch und mechanisch gekoppelt. Nicht erkennbar ist in dieser Ansicht, dass mindestens ein Montageadapter 4 über einen dritten Adapterhaken 14 mit der dritten Sammelschiene 23 mechanisch gekoppelt ist.

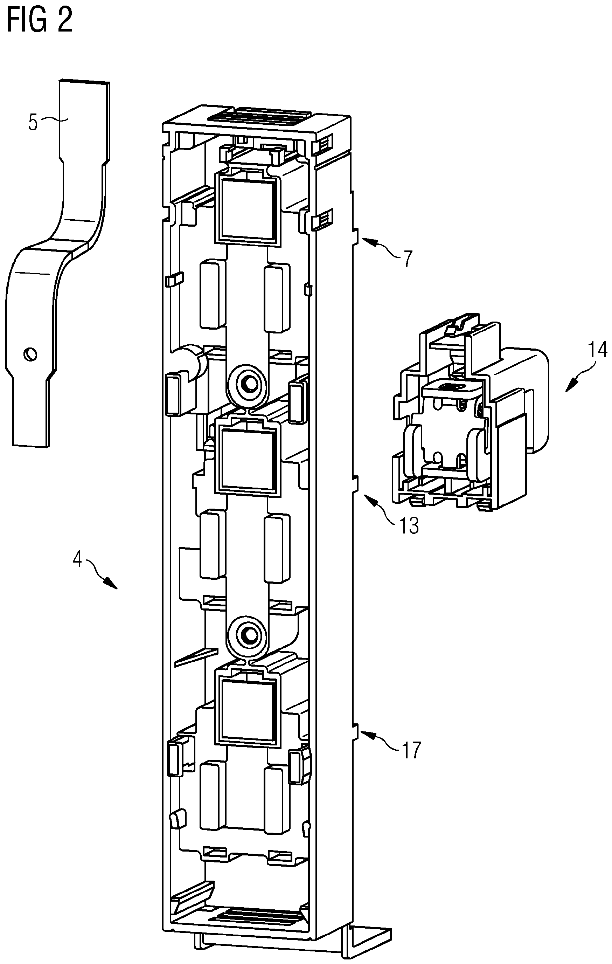

In Fig. 2 ist eine bevorzugte Ausführungsform eines Montageadapters 4 schematisch in einer ersten Konfiguration in einer perspektivischen Explosionsdarstellung abgebildet. Der Montageadapter 4 weist einen ersten Leiterabschnitt 5 zum mechanischen sowie elektrischen Koppeln mit einem ersten Adapterhaken 6 auf. Auf einer Rückseite des Montageadapters 4 sind ein zweiter Leiterabschnitt 7 zur Anordnung eines zweiten Adapterhakens 8 sowie ein erster Anschlussabschnitt 13 und ein zweiter Anschlussabschnitt 17 zur mechanischen Kopplung mit einem dritten Adapterhaken 14 auf. In dieser ersten Konfiguration ist der dritte Adapterhaken 14 dem ersten Anschlussabschnitt 13 zugeordnet und somit mit der dritten Sammelschiene 23 mechanisch koppelbar. Diese erste Konfiguration entspricht dem in Fig. 1 gezeigten rechten Montageadapter 4. Somit ist der Sicherungslasttrenner 2 über den Montageadapter 4 und den ersten Adapterhaken 6 mit der ersten Sammelschiene 21 elektrisch koppelbar sowie über den Montageadapter 4, den ersten Adapterhaken 6 und den dritten Adapterhaken 14 mit der ersten Sammelschiene 21 und dritten Sammelschiene 23 mechanisch koppelbar.

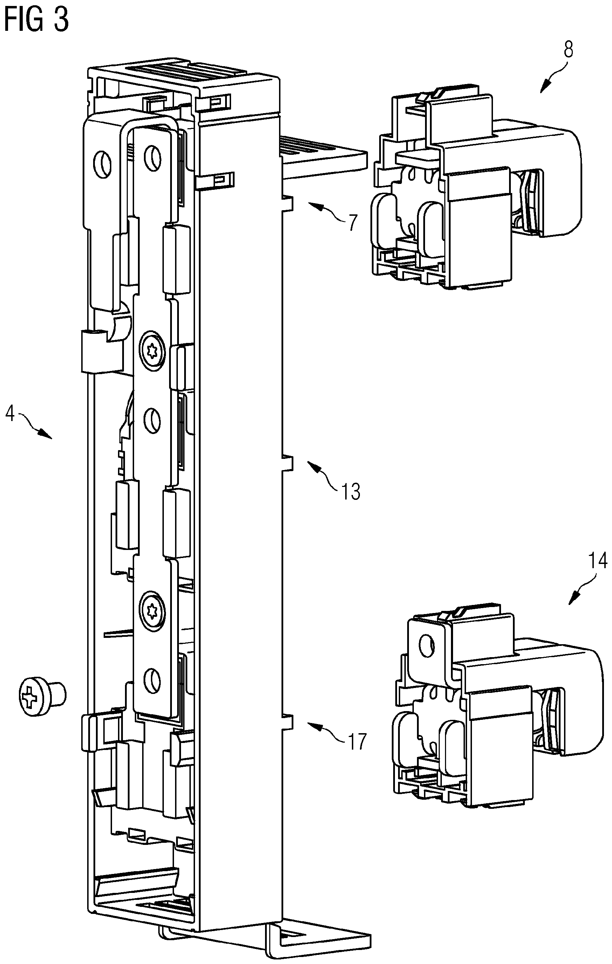

Fig. 3 zeigt den Montageadapter 4 aus Fig. 2 schematisch in einer zweiten Konfiguration. In dieser zweiten Konfiguration ist er Montageadapter 4 für die 1-Pol-Version des Sicherungslasttrenners 2 konfiguriert. Der in dieser Abbildung nicht dargestellte Sicherungslasttrenner 2 ist mit dem Montageadapter 4 mechanisch und elektrisch koppelbar. Dem zweiten Leiterabschnitt 7 ist ein zweiter Adapterhaken 8 zum elektrischen und mechanischen Koppeln mit der zweiten Sammelschiene 22 des Schaltschranks zugeordnet. Dem zweiten Anschlussabschnitt 17 ist ein dritter Adapterhaken 14 zum mechanischen Koppeln mit der vierten Sammelschiene 24 des Schaltschranks zugeordnet. Somit ist der Sicherungslasttrenner 2 über den Montageadapter 4 und den zweiten Adapterhaken 8 mit der zweiten Sammelschiene 22 elektrisch koppelbar sowie über den Montageadapter 4, den zweiten Adapterhaken 8 und den dritten Adapterhaken 14 mit der zweiten Sammelschiene 22 und vierten Sammelschiene 24 mechanisch koppelbar.

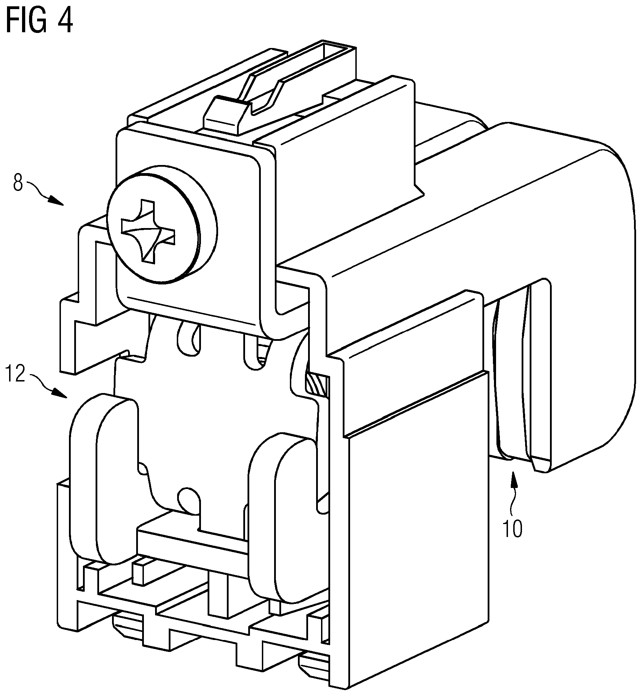

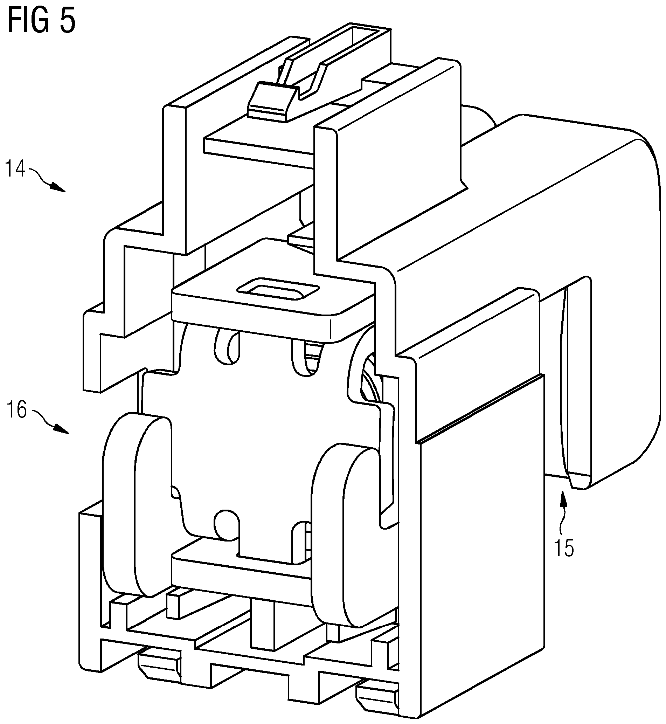

In Fig. 4 ist eine bevorzugte Ausführungsform eines zweiten Adapterhakens 8 in einer perspektivischen Ansicht schematisch dargestellt. Der zweite Adapterhaken 8 weist eine zweite Klemmvorrichtung 10 zum lösbaren Klemmen bzw. Fixieren an der zweiten Sammelschiene 22 des Schaltschranks auf. Ferner weist der zweite Adapterhaken 8 eine zweite Fixiervorrichtung 12 zum lösbaren Fixieren an dem zweiten Leiterabschnitt 7 auf. Der zweite Adapterhaken 8 ist zur elektrischen sowie mechanischen Kopplung des zweiten Leiterabschnitts 7 des Montageadapters 4 mit der zweiten Sammelschiene 22 ausgebildet. Fig. 5 zeigt eine bevorzugte Ausführungsform eines dritten Adapterhakens 14 schematisch in einer perspektivischen Ansicht. Der dritte Adapterhaken 14 weist eine dritte Klemmvorrichtung 15 zum lösbaren Klemmen bzw. Fixieren an der dritten Sammelschiene 23 bzw. der vierten Sammelschiene 24 des Schaltschranks auf. Ferner weist der dritte Adapterhaken 14 eine dritte Fixiervorrichtung 16 zum lösbaren Fixieren an dem ersten Anschlussabschnitt 13 bzw. dem zweiten Anschlussabschnitt 17 auf. Der dritte Adapterhaken 14 ist zur mechanischen Kopplung des ersten Anschlussabschnitts 13 mit der dritten Sammelschiene 23 sowie des zweiten Anschlussabschnitts 17 mit der vierten Sammelschiene 24 ausgebildet. Vorzugsweise ist der dritte Adapterhaken 14 als elektrischer Isolator ausgebildet, um den ersten Anschlussabschnitt 13 gegenüber der dritten Sammelschiene 23 bzw. den zweiten Anschlussabschnitt 17 gegenüber der vierten Sammelschiene 24 elektrisch zu isolieren.

### Bezugszeichenliste

- 1: Sicherungslasttrennersystem
- 2: Sicherungslasttrenner
- 3: Kontaktträger
- 4: Montageadapter
- 5: erster Leiterabschnitt
- 6: erster Adapterhaken
- 7: zweiter Leiterabschnitt
- 8: zweiter Adapterhaken
- 9: erste Klemmvorrichtung
- 10: zweite Klemmvorrichtung
- 11: erste Fixiervorrichtung
- 12: zweite Fixiervorrichtung
- 13: erster Anschlussabschnitt
- 14: dritter Adapterhaken
- 15: dritte Klemmvorrichtung
- 16: dritte Fixiervorrichtung
- 17: zweiter Anschlussabschnitt

- 21: erste Sammelschiene
- 22: zweite Sammelschiene
- 23: dritte Sammelschiene
- 24: vierte Sammelschiene

## Patentansprüche

1. Sicherungslasttrennersystem (1), aufweisend einen Sicherungslasttrenner (2) mit einem Kontaktträger (3) zur elektrischen Kopplung des Sicherungslasttrenners (2) und einen Montageadapter (4) zum Aufnehmen des Kontaktträgers (3) sowie zur Montage an Sammelschienen (21, 22, 23) eines Schaltschranks, wobei der Montageadapter (4) einen ersten Leiterabschnitt (5) zum elektrischen Koppeln des Sicherungslasttrenners (2) mit einer ersten Sammelschiene (21) des Schaltschranks aufweist, wobei das Sicherungslasttrennersystem (1) mindestens einen ersten Adapterhaken (6) zum elektrischen Koppeln des ersten Leiterabschnitts (5) mit der ersten Sammelschiene (21) aufweist, wobei der erste Adapterhaken (6) mit dem ersten Leiterabschnitt (5) elektrisch und mechanisch koppelbar ist, und wobei
der Montageadapter (4) einen zweiten Leiterabschnitt (7) zum elektrischen Koppeln des Sicherungslasttrenners (2) mit einer zweiten Sammelschiene (22) des Schaltschranks aufweist, wobei das Sicherungslasttrennersystem (1) mindestens einen zweiten Adapterhaken (8) zum elektrischen Koppeln des zweiten Leiterabschnitts (7) mit der zweiten Sammelschiene (22) aufweist, wobei der zweite Adapterhaken (8) mit dem zweiten Leiterabschnitt (7) elektrisch und mechanisch koppelbar ist, und wobei der Montageadapter (4) und/oder der erste Adapterhaken (6) eine erste Fixiervorrichtung (11) zum lösbaren Fixieren des ersten Adapterhakens (6) am Montageadapter (4) und der Montageadapter (4) und/oder der zweite Adapterhaken (8) eine zweite Fixiervorrichtung (12) zum lösbaren Fixieren des zweiten Adapterhakens (8) am Montageadapter (4) aufweist, und wobei der Montageadapter (4) mindestens einen ersten Anschlussabschnitt (13) aufweist, wobei das Sicherungslasttrennersystem (1) mindestens einen dritten Adapterhaken (14) zum mechanischen Fixieren an dem ersten Anschlussabschnitt (13) sowie zum mechanischen Koppeln mit einer dritten Sammelschiene (23) des Schaltschranks aufweist,
**dadurch gekennzeichnet, dass** der dritte Adapterhaken (14) als elektrischer Isolator ausgebildet ist, so dass der Montageadapter (4) gegenüber der dritten Sammelschiene (23) elektrisch isolierbar ist.

2. Sicherungslasttrennersystem (1) nach Anspruch 1,
**dadurch gekennzeichnet,**
**dass** der erste Adapterhaken (6) eine erste Klemmvorrichtung (9) zum Klemmen des ersten Adapterhakens (6) an die erste Sammelschiene (21) und/oder der zweite Adapterhaken (8) eine zweite Klemmvorrichtung (10) zum Klemmen des zweiten Adapterhakens (8) an die zweite Sammelschiene (22)aufweist.

3. Sicherungslasttrennersystem (1) nach einem der vorhergehenden Ansprüche,
**dadurch gekennzeichnet,**
**dass** der dritte Adapterhaken (14) eine dritte Klemmvorrichtung (15) zum Klemmen des dritten Adapterhakens (14) an die dritte Sammelschiene (23) aufweist.

4. Sicherungslasttrennersystem (1) nach einem der vorhergehenden Ansprüche,
**dadurch gekennzeichnet,**
**dass** der Montageadapter (4) und/oder der dritte Adapterhaken (14) eine dritte Fixiervorrichtung (16) zum lösbaren Fixieren des dritten Adapterhakens (14) am Montageadapter (4) aufweist.

5. Sicherungslasttrennersystem (1) nach einem der vorhergehenden Ansprüche,
**dadurch gekennzeichnet,**
**dass** der zweite Adapterhaken (8) und der dritte Adapterhaken (9) identisch ausgebildet sind.

## Claims

1. Fuse load disconnector system (1), having a fuse load disconnector (2) with a contact carrier (3) for electrically coupling the fuse load disconnector (2) and a mounting adapter (4) for receiving the contact carrier (3) and for mounting on busbars (21, 22, 23) of a switchgear cabinet, wherein the mounting adapter (4) has a first conductor section (5) for electrically coupling the fuse load disconnector (2) to a first busbar (21) of the switchgear cabinet, wherein the fuse load disconnector system (1) has at least one first adapter hook (6) for electrically coupling the first conductor section (5) to the first busbar (21), wherein the first adapter hook (6) can be electrically and mechanically coupled to the first conductor section (5), and wherein
the mounting adapter (4) has a second conductor section (7) for electrically coupling the fuse load disconnector (2) to a second busbar (22) of the switchgear cabinet, wherein the fuse load disconnector system (1) has at least one second adapter hook (8) for electrically coupling the second conductor section (7) to the second busbar (22), wherein the second adapter hook (8) can be electrically and mechanically coupled to the second conductor section (7), and wherein
the mounting adapter (4) and/or the first adapter hook (6) has a first fixing apparatus (11) for detachably fixing the first adapter hook (6) to the mounting adapter (4) and the mounting adapter (4) and/or the second adapter hook (8) has a second fixing apparatus (12) for detachably fixing the second adapter hook (8) to the mounting adapter (4), and wherein
the mounting adapter (4) has at least one first connection section (13), wherein the fuse load disconnector system (1) has at least one third adapter hook (14) for mechanical fixing to the first connection section (13) and for mechanical coupling to a third busbar (23) of the switchgear cabinet, **characterized in that** the third adapter hook (14) is designed as an electrical insulator, so that the mounting adapter (4) can be electrically insulated from the third busbar (23).

2. Fuse load disconnector system (1) according to Claim 1, **characterized**
**in that** the first adapter hook (6) has a first clamping apparatus (9) for clamping the first adapter hook (6) to the first busbar (21) and/or the second adapter hook (8) has a second clamping apparatus (10) for clamping the second adapter hook (8) to the second busbar (22).

3. Fuse load disconnector system (1) according to either of the preceding claims,
**characterized**
**in that** the third adapter hook (14) has a third clamping apparatus (15) for clamping the third adapter hook (14) to the third busbar (23).

4. Fuse load disconnector system (1) according to one of the preceding claims,
**characterized**
**in that** the mounting adapter (4) and/or the third adapter hook (14) has a third fixing apparatus (16) for detachably fixing the third adapter hook (14) to the mounting adapter (4).

5. Fuse load disconnector system (1) according to one of the preceding claims,
**characterized**
**in that** the second adapter hook (8) and the third adapter hook (9) are of identical design.

## Revendications

1. Système de sectionneur fusible à coupure en charge (1), comportant un sectionneur fusible à coupure en charge (2) avec un porte-contacts (3) destiné à coupler électriquement le sectionneur fusible à coupure en charge (2) et un adaptateur de montage (4) destiné à recevoir le porte-contacts (3) et à monter le système sur des jeux de barres (21, 22, 23) d'une armoire de commande, l'adaptateur de montage (4) comportant une première section conductrice (5) destinée à coupler électriquement le sectionneur fusible à coupure en charge (2) à un premier jeu de barres (21) de l'armoire de commande, le système de sectionneur fusible à coupure en charge (1) comportant au moins un premier crochet adaptateur (6) destiné à coupler électriquement la première section conductrice (5) au premier jeu de barres (21), le premier crochet adaptateur (6) pouvant être électriquement et mécaniquement couplé à la première section conductrice (5), et
l'adaptateur de montage (4) comportant une seconde section conductrice (7) destinée à coupler électriquement le sectionneur fusible à coupure en charge (2) à un deuxième jeu de barres (22) de l'armoire de commande, le système de sectionneur fusible à coupure en charge (1) comportant au moins un deuxième crochet adaptateur (8) destiné à coupler électriquement la seconde section conductrice (7) au deuxième jeu de barres (22), le deuxième crochet adaptateur (8) pouvant être couplé électriquement et mécaniquement à la seconde section conductrice (7),
et l'adaptateur de montage (4) et/ou le premier crochet adaptateur (6) comportant un premier dispositif de fixation (11) destiné à fixer de manière amovible le premier crochet adaptateur (6) sur l'adaptateur de montage (4) et l'adaptateur de montage (4) et/ou le deuxième crochet adaptateur (8) comportant un deuxième dispositif de fixation (12) destiné à fixer de manière amovible le deuxième crochet adaptateur (8) sur l'adaptateur de montage (4), et
l'adaptateur de montage (4) comportant au moins une première section de raccordement (13), le système de sectionneur fusible à coupure en charge (1) comportant au moins un troisième crochet adaptateur (14) destiné à la fixation mécanique à la première section de raccordement (13) ainsi qu'au couplage mécanique à un troisième jeu de barres (23) de l'armoire électrique, **caractérisé en ce que** le troisième crochet adaptateur (14) est conçu comme un isolant électrique, de sorte que l'adaptateur de montage (4) peut être isolé électriquement du troisième jeu de barres (23).

2. Système de sectionneur fusible à coupure en charge (1) selon la revendication 1,
**caractérisé en ce que**
le premier crochet adaptateur (6) comporte un premier dispositif de serrage (9) destiné à serrer le premier crochet adaptateur (6) sur le premier jeu de barres (21) et/ou le deuxième crochet adaptateur (8) comporte un deuxième dispositif de serrage (10) destiné à serrer le deuxième crochet adaptateur (8) sur le deuxième jeu de barres (22).

3. Système de sectionneur fusible à coupure en charge (1) selon l'une des revendications précédentes,
**caractérisé en ce que**
le troisième crochet adaptateur (14) comporte un troisième dispositif de serrage (15) destiné à serrer le troisième crochet adaptateur (14) sur le troisième jeu de barres (23).

4. Système de sectionneur fusible à coupure en charge (1) selon l'une des revendications précédentes,
**caractérisé en ce que**
l'adaptateur de montage (4) et/ou le troisième crochet adaptateur (14) comportent un troisième dispositif de fixation (16) destiné à la fixation amovible du troisième crochet adaptateur (14) sur l'adaptateur de montage (4).

5. Système de sectionneur fusible à coupure en charge (1) selon l'une des revendications précédentes,
**caractérisé en ce que**
le deuxième crochet adaptateur (8) et le troisième crochet adaptateur (9) sont conçus de manière identique.
